**Europäisches Patentamt**

(19) **European Patent Office**

**Office européen des brevets**

(11) Veröffentlichungsnummer: **0 027 556**
**B1**

(12) ## EUROPÄISCHE PATENTSCHRIFT

(45) Veröffentlichungstag der Patentschrift:
27.04.83

(51) Int. Cl.³: **C 08 L 25/04,** C 08 K 5/00,
C 08 K 5/31, C 08 J 9/00

(21) Anmeldenummer: **80105707.6**

(22) Anmeldetag: **23.09.80**

(54) **Verfahren zur Herstellung von flammgeschützten, schaumförmigen Styrolpolymerisaten.**

(30) Priorität: **03.10.79 DE 2940073**

(43) Veröffentlichungstag der Anmeldung:
**29.04.81 Patentblatt 81/17**

(45) Bekanntmachung des Hinweises auf die Patenterteilung:
**27.04.83 Patentblatt 83/17**

(84) Benannte Vertragsstaaten:
**BE DE FR GB IT NL**

(56) Entgegenhaltungen:
**EP-A-0 003 799**

(73) Patentinhaber: **BASF Aktiengesellschaft,
Carl-Bosch-Strasse 38, D-6700 Ludwigshafen (DE)**

(72) Erfinder: **Fried, Michael, Dr., Bergstrasse 152,
D-6900 Heidelberg (DE)**
Erfinder: **Zuern, Ludwig, Dr., Halsbergstrasse 2 A,
D-6702 Bad Duerkheim (DE)**
Erfinder: **Weilbacher, Manfred, Dr., Taunusstrasse 27,
D-6710 Frankenthal (DE)**
Erfinder: **Weber, Reinhold, An der Steinernen
Bruecke 11, D-6704 Mutterstadt (DE)**

## Verfahren zur Herstellung von flammgeschützten, schaumförmigen Styrolpolymerisaten

Es ist bekannt, dass Styrolpolymerisate durch den Zusatz von organischen Halogenverbindungen flammhemmend ausgerüstet werden können. Bromverbindungen sind im allgemeinen wirksamer, trotzdem gibt man Chlorverbindungen den Vorzug, da sie wesentlich preisgünstiger sind. Einen Kompromiss stellt die gemeinsame Verwendung von Chlor- und Bromverbindungen dar. Da organische Chlorverbindungen bei erhöhten Temperaturen um etwa 200°C zur Chlorwasserstoff-Abspaltung neigen, sind bei der Verarbeitung der Formmassen enge Grenzen gesetzt. Dies gilt insbesondere für die Herstellung von Schaumstoffen aus Styrolpolymerisaten durch Extrusion von treibmittelhaltigen Mischungen. Hier kommt es, wenn man die Extrusion nicht unter sehr schonenden Bedingungen, d.h. bei niederen Temperaturen und geringen Durchsatzleistungen, vornimmt, leicht zur Verfärbung der Schaumstoffe.

Besonders kritisch ist auch die Verarbeitung von Styrolpolymerisaten, die als an sich bekannte Synergisten (GB-PS 1 077 163 und 1 179 604) für die chlorhaltigen Flammschutzmittel metallorganische Verbindungen enthalten. Durch Chlor oder Chloridionen, die bei der Zersetzung des Flammschutzmittels entstehen können, wird die synergistische Wirksamkeit der Metallkomplexe herabgesetzt, was meist mit einer unerwünschten Verfärbung des Styrolpolymerisats einhergeht.

Der Erfindung lag nun die Aufgabe zugrunde, bei der Herstellung von flammgeschützten, schaumförmigen Styrolpolymerisaten, die organische Chlorverbindungen und gegebenenfalls zusätzlich organische Bromverbindungen als Flammschutzmittel enthalten, durch Vermischen von Styrolpolymerisat, Flammschutzmittel und Stabilisator mit einem Treibmittel bei Temperaturen zwischen 180° und 250°C, Auspressen der Mischung an die Umgebungsatmosphäre und anschliessende Abkühlung des entstandenen Schaumstoffes, die Mischung so zu stabilisieren, dass keine unerwünschte Verfärbung und Schädigung eintritt.

Diese Aufgabe wird erfindungsgemäss dann gelöst, wenn die Mischung als Stabilisator 0,02 bis 2 Gew.-%, bezogen auf das Polymerisat, einer Guanidinverbindung zugemischt enthält.

In der DE-OS 2 603 509 sind selbstverlöschende Styrolpolymerisate beschrieben, die bestimmte niedermolekulare Bromverbindungen als Flammschutzmittel und eine Kombination von C-C-labilen Verbindungen und Triazin oder s-Triaminotriazin als Synergisten enthalten. Eine stabilisierende Wirkung des s-Triaminotriazins wird nicht erwähnt. In der US-PS 3 817 966 sind Formmassen aus isotaktischem Polystyrol beschrieben, die als Nucleierungsmittel Melamin enthalten. In der EP-A-3 799 sind feinteilige, expandierbare Teilchen aus einem Styrolpolymerisat beschrieben, die ein Treibmittel, eine flammhemmende organische Halogenverbindung, sowie ein 2,4-Diamino-1,3,5-triazin-Derivat enthalten. Die expandierbaren Teilchen werden durch Verschäumen und Verschweissen zu Schaumstoffkörpern verarbeitet. Dabei sollen die Triazinderivate eine Verbesserung der Verschweissung bewirken. Von einer Stabilisatorwirkung ist nicht die Rede.

Als Styrolpolymerisate kommen neben Polystyrol auch Mischpolymerisate des Styrols mit bis zu 50 Gew.-% an Comonomeren, z.B. $\alpha$-Methylstyrol, Acrylnitril oder Ester der Acryl- oder Methacrylsäure in Frage, sowie mit Kautschuken schlagzäh modifiziertes Polystyrol.

Die Styrolpolymerisate enthalten als Flammschutzmittel eine organische Chlorverbindung. Der Chlorgehalt der Formmassen soll dabei vorzugsweise zwischen 0,5 und 5 Gew.-% liegen. In Frage kommen niedermolekulare Chlorverbindungen, wie Hexachlorcyclododecan, Hexachlorcyclopentadien, Hexachlorendomethylen-tetrahydrophthalsäure und Tetrachlorbutyrolacton. Besonders zweckmässig sind aber hochmolekulare Chlorverbindungen, wie nachchloriertes Polyvinylchlorid mit einem Chlorgehalt von etwa 58 bis 63 Gew.-%, chloriertes Polyisobutylen mit einem Chlorgehalt von 40 bis 50 Gew.-%, chlorierte Paraffine mit einem Chlorgehalt von 60 bis 75 Gew.-%, deren Kohlenstoffketten mindestens 18 bis 40 C-Atome aufweisen, oder Vinylchlorid-Äthylen-Copolymerisate mit einem Gehalt an 5 bis 50 Gew.-% copolymerisiertem Äthylen. Es ist in jedem Fall sinnvoll, Chlorverbindungen mit einem hohen Chlorgehalt zu verwenden, um deren Mengen in der Kunststoffmasse möglichst niedrig halten zu können.

Es ist möglich, die Flammschutzwirkung durch Zugabe von organischen Bromverbindungen zu erhöhen. Geeignet sind hierfür insbesondere Verbindungen mit einem Bromgehalt von mindestens 30 Gew.-%, die schwerflüchtig sind, keinen störenden Geruch haben und die nicht oder nur in geringem Masse als Weichmacher wirken. Als zweckmässig haben sich erwiesen Hexabromcyclododecan, Octabromhexadecan, bromierte Synthese- oder Naturkautschuke und andere Bromierungsprodukte des Isoprens und Butadiens. Eine verbesserte Flammschutzwirkung wird bei einem Bromgehalt in der Kunststoffmasse von mindestens 0,05 Gew.-% erzielt.

Man kann auch organische Verbindungen einsetzen, die sowohl Chlor- als auch Bromatome aufweisen, wie z.B. Pentabrommonochlorcyclohexan.

Bevorzugter Stabilisator ist Melamin, es können jedoch auch andere Guanidinverbindungen, wie z.B. N-Methylguanidin, Acetoguanamin, Stearoguanamin, Isophthalobisguanamin, Hexamethylolmelaminstearyläther, Melaminstearat, 2-Aminobenzimidazol oder 3-Amino-1,2,4-tetrazol verwendet werden.

Als Synergisten eignen sich bestimmte organische Komplexverbindungen von Übergangsmetallen der 6. bis 8. Nebengruppe, wie beispielsweise die Dicyclopentadienyl-Eisen-, Kobalt- und Mangankomplexe. Gut wirksam sind auch die entsprechenden Carbonylverbindungen ebenso Kobaltacetylacetonat, Chromacetylacetonat-dibromid, Chromanthranilat, Nickelsalicylaldehyd, Kupferacetylacetonat, Molybdänacetylacetonat. Bevorzugter Synergist ist der Eisenkomplex des Nitrosonaphthols (C.J. 10 006). Je nach verwendetem Komplex beträgt die erforderliche Menge 0,1 bis 1 Gew.-%, bezogen auf die Formmasse. In der bevorzugten Ausführungsform unter Verwendung des Eisen-nitrosonaphthol-Komplexes werden Mengen von 0,05 bis 0,5 Gew.-% eingesetzt.

Die Styrolpolymerisate können darüber hinaus die üblichen Zusatzstoffe, wie Farbstoffe, Füllstoffe, Fliesshilfsmittel, Keimbildungsmittel oder Stabilisatoren enthalten.

Die flammgeschützten, schaumförmigen Styrolpolymerisate werden erfindungsgemäss hergestellt durch Vermischen von Styrolpolymerisat, Flammschutzmittel und Stabilisator mit einem Treibmittel, z.B. auf einem üblichen Ein- oder Zweiwellenextruder, bei Temperaturen zwischen 180° und 250°C, Auspressen der Mischung durch eine Düse an die Umgebungsatmosphäre und anschliessende Abkühlung, wobei ein Schaumstoff entsteht, der je nach Querschnitt und Form der Düse rund, oval oder rechteckig ist. Als Treibmittel eignen sich bei Normalbedingungen flüchtige Kohlenwasserstoffe oder Halogenkohlenwasserstoffe, wie Propan, Butan, Pentan, Hexan, Methylchlorid, Methylenchlorid, Dichlordifluormethan, Tetrafluordichloräthan oder Gemische davon. Auch feste Treibmittel, wie Azodiisobutyronitril oder Azodicarbonamid sind geeignet. Die Treibmittel werden den Styrolpolymerisaten im allgemeinen in Mengen von 2 bis 20 Gew.-% zugesetzt.

Die Schwerentflammbarkeit der Formmassen wird auf folgende Weise geprüft. Der Formkörper wird 5 Sekunden mit der nichtleuchtenden Flamme eines Bunsenbrenners beflammt, anschliessend wird der Brenner entfernt. Die Zeit bis zum Verlöschen der Probe nach dem Entfernen des Brenners ist ein Mass für die Flammwidrigkeit; ungenügend oder nicht schwerentflammbar ausgerüstete Formkörper brennen nach dem Entfernen des Brenners mehr oder weniger vollständig ab.

Die in den Beispielen genannten Teile und Prozente sind Gewichtsteile.

*Beispiel 1* (Vergleich)

100 Teile Polystyrol, 0,25 Teile Calziumstearat, 2,5 Teile Chlorparaffin-70 (70% Chlor), 0,50 Teile Hexabromcyclododecan, 0,25 Teile Eisenkomplex des $\alpha$-Nitroso-$\beta$-naphthols und 1% Talkum werden in einer Doppelschneckenpresse mit der Länge 42 D bei 200 bis 220°C aufgeschmolzen. Bei einem Schneckenabschnitt von ca. 18 D wird ein Gemisch aus 10 Teilen Methylenchlorid und 5 Teilen Dichlortetrafluoräthan in die Masse eingedrückt und homogenisiert. Das Gel entspannt durch eine Breitschlitzdüse ins Freie und bildet eine Schaumplatte mit schmutziggrauem Aussehen und einem Schaumgewicht von ca. 30 g/l. Der verhältnismässig grobzellige Schaumkörper zeigt im Brandtest eine Nachbrennzeit von 15 bis 18 sec nach 6-wöchiger Ablagerung, in der der überwiegende Anteil Methylchlorid verflüchtigt ist.

*Beispiel 2*

Wiederholt man das Beispiel 1, setzt jedoch zusätzlich 0,15 Teile Melamin zu, so erhält man eine Schaumplatte mit hellgrünem Farbton. Die Dichte beträgt bei einer deutlich feinzelligeren Schaumstruktur 30 bis 35 g/l, wobei die Nachbrennzeit unter 1 sec liegt.

**Patentansprüche**

1. Verfahren zur Herstellung von flammgeschützten, schaumförmigen Styrolpolymerisaten, die organische Chlorverbindungen und gegebenenfalls zusätzlich organische Bromverbindungen als Flammschutzmittel sowie einen Stabilisator enthalten, durch Vermischen von Styrolpolymerisat, Flammschutzmittel und Stabilisator mit einem Treibmittel bei Temperaturen zwischen 180° und 250°C, Auspressen der Mischung an die Umgebungsatmosphäre und anschliessende Abkühlung des entstandenen Schaumstoffs, dadurch gekennzeichnet, dass die Mischung als Stabilisator 0,02 bis 2 Gew.-% einer Guanidinverbindung enthält.

2. Verfahren nach Anspruch 1, dadurch gekennzeichnet, dass die Mischung Melamin als Stabilisator enthält.

3. Verfahren nach Anspruch 1, dadurch gekennzeichnet, dass die Mischung eine organische Chlorverbindung zusammen mit einer organischen Bromverbindung oder eine organische Verbindung, die sowohl Chlor- als auch Bromatome trägt, als Flammschutzmittel enthält.

4. Verfahren nach Anspruch 1, dadurch gekennzeichnet, dass die Mischung als Flammschutzsynergist eine metallorganische Verbindung eines Metalls der 6. bis 8. Nebengruppe des periodischen Systems enthält.

5. Verfahren nach Anspruch 1, dadurch gekennzeichnet, dass die Mischung eine hochmolekulare Chlorverbindung mit einem Chlorgehalt zwischen 40 und 80 Gew.-%, vorzugsweise zusammen mit einer organischen Bromverbindung als Flammschutzmittel enthält.

6. Verfahren nach Anspruch 1, dadurch gekennzeichnet, dass die Mischung Pentabrommonochlorcyclohexan als Flammschutzmittel enthält.

**Revendications**

Procédé de préparation de polymères de styrène alvéolaires, ignifugés, qui contiennent des composés chlorés organiques et éventuellement, en plus, des composés bromés organiques comme agent d'ignifugation ainsi qu'un stabilisant, par mélange de polymère de styrène, agent ignifugeant et stabilisant avec un gonflant, à des températures comprises entre 180° et 250°C, extraction du mélange à l'atmosphère ambiante et puis refroidissement de la matière alvéolaire produite, caractérisé par le fait que le mélange contient, comme stabilisant, 0,02 à 2% en poids d'un composé de guanidine.

2. Procédé selon la revendication 1, caractérisé par le fait que le mélange contient, comme stabilisant, de la mélamine.

3. Procédé selon la revendication 1, caractérisé par le fait que le mélange contient un composé chloré organique en même temps qu'un composé bromé organique ou un composé organique qui porte aussi bien des atomes de chlore que de brome.

4. Procédé selon la revendication 1, caractérisé par le fait que le mélange contient, comme synergiste d'ignifugation, un composé organométallique d'un métal des sixième à huitième groupes secondaires du tableau périodique.

5. Procédé selon la revendication 1, caractérisé par le fait que le mélange contient, comme agent d'ignifugation, un composé chloré de poids moléculaire élevé, à teneur en chlore comprise entre 40 et 80% en poids, de préférence en même temps qu'un composé bromé organique.

6. Procédé selon la revendication 1, caractérisé par le fait que le mélange contient, comme agent d'ignifugation, du pentabromomonochlorocyclohexane.

## Claims

1. A process for the production of flameproofed foamed styrene polymers which contain organic chlorine compounds, with or without organic bromine compounds, as flameproofing agents, and a stabilizer, by mixing the styrene polymer, flameproofing agent(s) and stabilizer with a blowing agent at 180° to 250°C, extruding the mixture into the surrounding atmosphere and sebsequently cooling the resulting foam, wherein the mixture contains, as stabilizer, from 0.02 to 2% by weight of a guanidine compound.

2. A process as claimed in claim 1, wherein the mixture contains melamine as stabilizer.

3. A process as claimed in claim 1, wherein the mixture contains, as flameproofing agent, an organic chlorine compound together with an organic bromine compound, or an organic compound which contains both chlorine and bromine atoms.

4. A process as claimed in claim 1, wherein the mixture contains an organo-metallic compound of a metal of sub-group 6 to 8 of the Periodic Table as an agent for synergistically increasing the flameproofing action.

5. A process as claimed in claim 1, wherein the mixture contains, as flameproofing agent, a high molecular weight chlorine compound containing from 40 to 80% by eight of chlorine, preferably together with an organic bromine compound.

6. A process as claimed in claim 1, wherein the mixture contains pentabromomonochlorocyclohexane as flameproofing agent.